# EUROPÄISCHE PATENTSCHRIFT

(11) **EP 2 893 164 B1**
(45) Veröffentlichungstag und Bekanntmachung des Hinweises auf die Patenterteilung: **11.09.2019**
(21) Anmeldenummer: 13739463.1
(22) Anmeldetag: 23.07.2013
(51) Int. Cl.: G01N 25/04, G01N 27/06, G01N 29/024, F01N 3/20, F01N 11/00

(54) **MESSELEMENT SOWIE VERFAHREN ZUR UNTERSCHEIDUNG VON VERSCHIEDENARTIGEN FLÜSSIGKEITEN**
MEASUREMENT ELEMENT AND METHOD FOR DIFFERENTIATING VARIOUS KINDS OF LIQUIDS
ÉLÉMENT DE MESURE ET PROCÉDÉ PERMETTANT DE DIFFÉRENCIER DES LIQUIDES DE NATURE DIFFÉRENTE

(30) Priorität: 04.09.2012 DE 102012215635
(43) Veröffentlichungstag der Anmeldung: 15.07.2015
(73) Patentinhaber: Robert Bosch GmbH, 70442 Stuttgart (DE)
(72) Erfinder: LOESCH, Stefan, 86647 Wortelstetten (DE)
(86) Internationale Anmeldenummer: PCT/EP2013/065503
(87) Internationale Veröffentlichungsnummer: WO 2014/037144

(56) Entgegenhaltungen:
- EP-A1- 0 114 442
- WO-A1-2007/129055
- CN-A- 1 892 208
- DE-A1-102008 018 028
- GB-A- 2 476 317
- JP-A- 2009 216 405
- Peter W. Atkins, A. Höpfner (Übersetzung: "Physikalische Chemie", 1. Januar 1990 (1990-01-01), VCH Verlagsgesellschaft (DE);, D - 6940 Weinheim, XP002714635, ISBN: 3-527-25913-9 Seiten 177-181, Seite 177, Zeile 181

## Beschreibung

### Stand der Technik

Die Erfindung betrifft einen Messelement sowie ein Verfahren zur Unterscheidung von verschiedenartigen Flüssigkeiten gemäß dem Oberbegriff der unabhängigen Ansprüche.

Zur Entstickung des Abgases von Dieselmotoren haben sich sogenannte DENOX-Systeme bewährt, bei denen Stickoxide im Abgas der Dieselmotoren mittels Eindosierung von wässriger Harnstofflösung in Stickstoff und Wasserdampf umgewandelt werden. Die wässrige Harnstofflösung wird in einem Tank bevorratet und mittels eines elektronisch geregelten Dosiersystems dem Abgaskanal des Dieselmotors zugeführt. Durch Fehlbetankungen, beispielsweise der Befüllung des Tanks für die wässrige Harnstofflösung mit Kraftstoff, Kühlflüssigkeit oder Wasser bzw. einer gezielten Manipulation, beispielsweise der Verdünnung der wässrigen Harnstofflösung mit Wasser, kann die Funktion des DENOX-Systems beeinträchtigt werden, was bis zum Ausfall und/oder der dauerhaften Schädigung des DENOX-Systems führen kann. Aus der EP 1 283 332 ist ein Messprinzip bekannt, bei dem aus dem Druck im Vorratsbehälter für die wässrige Harnstofflösung auf deren Konzentration geschlossen wird. Wässrige Harnstofflösung unterliegt einem Alterungsprozess, wobei ein Teil des Harnstoffs in Ammoniak und Kohlendioxid zerfällt. Da der überwiegende Ammoniakteil wieder in Lösung geht, stellt dieser Prozess keine nennenswerte Qualitätsminderung bzw. Funktionsbeeinträchtigung des DENOX-Systems dar. Allerdings ändern sich dadurch der ph-Wert sowie die elektrische Leitfähigkeit der wässrigen Harnstofflösung. Somit ist es nicht ausreichend, den Zustand der wässrigen Harmstofflösung über die Größen "elektrische Leitfähigkeit" und "pH-Wert" hinreichend genau zu erfassen EP 0 114 442 A1 offenbart ein Messelement zur Unterscheidung von verschiedenartigen Flüssigkeiten.

### Offenbarung

Das erfindungsgemäße Messelement mit den Merkmalen des unabhängigen Anspruchs hat demgegenüber den Vorteil, dass ein Phasenübergang einer Flüssigkeit oder eines Derivats der Flüssigkeit provoziert wird und dass die Flüssigkeit oder das Derivat der Flüssigkeit anhand von Stoffeigenschaften, die mit dem Phasenübergang der Flüssigketi oder des Derivats der Flüssigkeit korrelieren, erkannt wird. Dadurch kann eine Flüssigkeit hinreichend genau charakterisiert werden und somit ermittelt werden, ob die vorliegende Flüssigkeit hinreichend genau die hinterlegten physikalischen und/oder chemischen Eigenschaften aufweist.

Durch die in den Unteransprüchen aufgeführten Maßnahmen sind vorteilhafte Weiterbildungen und Verbesserungen der vorgeschlagenen Zerstäubungsvorrichtung sowie der vorgeschlagenen Abgasnachbehandlungsvorrichtung möglich.

Erfindungsgemäß wird die Flüssigkeit oder das Derivat der Flüssigkeit bis zu einer Siedetemperatur der Flüssigkeit bzw. einer Siede- bzw. Zersetzungstemperatur des Derivats beheizt. Die Siedetemperatur von Wasser kann bei konstantem Druck beispielsweise durch die Zugabe von Kochsalz erhöht werden, wobei aus der Siedetemperatur ein Rückschluss auf die Kochsalzkonzentration der Lösung möglich ist. Ähnliches gilt für die Konzentration Harnstoff-Konzentration einer Wasser-Harnstoff-Lösung, wobei Harnstoff-Konzentration und Siedepunkt hinreichend gut korrelieren. Der Siedepunkt ist ein besonders gut geeigneter Phasenübergang, um die Stoffeigenschaften der Flüssigkeit zu bestimmen.

Alternativ ist, nicht Gegenstand der Erfindung, vorgesehen, dass die Flüssigkeit oder ein Derivat der Flüssigkeit bis zum Gefrierpunkt abgekühlt werden. Der Gefrierpunkt von Wasser lässt sich beispielsweise durch die Zugabe von Kochsalz erniedrigen. Auch hier kann aus der Temperatur am Gefrierpunkt auf die Kochsalzkonzentration zurückgeschlossen werden. Wässrige Harnstoff-Lösung weist dabei üblicherweise eine Harnstoff-Konzentration von ca. 32,5% auf, wobei der Gefrierpunkt bei Umgebungsdruck bei ca. -11°C liegt. Der Gefrierpunkt bzw. die Temperatur beim Phasenübergang der Flüssigkeit von flüssig zu fest ist ebenfalls ein sehr geeigneter Parameter zur Bestimmung der Stoffeigenschaften.

Eine vorteilhafte Weiterentwicklung des Verfahrens besteht darin, dass die Flüssigkeit einem Vorratsbehälter entnommen wird, wobei ein Messelement außerhalb des Vorratsbehälters mit der Flüssigkeit benetzt wird. Beispielsweise kann die Flüssigkeit einer Kammer zugeführt werden, die deutlich kleiner als der Vorratsbehälter ist. Somit kann hier gezielt an einer kleinen Menge der Flüssigkeit der Phasenübergang provoziert, ohne große Mengen der Flüssigkeit im Vorratsbehälter aufheizen oder kühlen zu müssen.

Erfindungsgemäß wird das Messelement beheizt. Durch ein beheizbares Messelement kann der Phasenübergang der Flüssigkeit oder des Derivats der Flüssigkeit erleichtert werden.

Besonders vorteilhaft ist es dabei, wenn das Messelement sowohl einen Druck als auch eine Temperatur der Flüssigkeit bzw. eines Derivats der Flüssigkeit ermittelt oder zwei Messelemente zur getrennten Erfassung von Druck und Temperatur vorhanden sind. Über eine Kombination der Temperatur am Phasenübergang und dem dabei vorliegenden Druck kann die Aussagegenauigkeit beispielsweise bzgl. einer Konzentration der Harnstofflösung erhöht werden.

Erfindungsgemäß wird das Messelement derart beheizt, dass die Flüssigkeit, beispielsweise eine wässrige Harnstofflösung, auf dem Messelement auskristallisiert. Neben der Erkennung einer Flüssigkeit anhand ihres Siede- oder Gefrierpunktes kann eine Flüssigkeit auch anhand der gebildeten Rückstände, beispielsweise anhand auskristallisierter Salze, erkannt werden, wobei der Schmelzpunkt bzw. der Zersetzungspunkt der Salze als Phasenübergang ebenfalls charakteristisch für die jeweilige Flüssigkeit ist.

Eine vorteilhafte Weiterentwicklung des Verfahrens besteht darin, dass das Messelement an einer Position angeordnet wird, in welcher es beim Befüllen eines Vorratsbehälters für die Flüssigkeit mit der Flüssigkeit benetzt wird. Dadurch kann schon beim Befüllen des Vorratsbehälters die Flüssigkeit analysiert werden, und beispielsweise kann eine mechanische Sperre vorgesehen werden, die nur nach positiver Erkennung der Flüssigkeit den Zufluss zum Vorratsbehälter freigibt. Somit kann eine Fehlbefüllung des Vorratsbehälters vermieden werden oder die bei einer Fehlbefüllung eingefüllte Menge an Flüssigkeit begrenzt werden und somit eine Beschädigung des Vorratsbehälters und/oder des aus dem Vorratsbehälter gespeisten Systems verhindert werden.

Erfindungsgemäß wird alternativ ein Derivat, insbesondere eine Auskristallisation der Flüssigkeit, beispielsweise ein Salz, in der Flüssigkeit gelöst. Beim Phasenübergang des Derivats, beispielsweise der Lösung eines in festem oder gasförmig vorliegenden kann die durch die Lösungsenthalpie freiwerdende Wärme oder die bei der Lösung eintretende Abkühlung der Flüssigkeit als charakteristisch für die Flüssigkeit zu Identifikation genutzt werden.

Das erfindungsgemäße Messelement ist geeignet, um die Stoffeigenschaften einer Flüssigkeit hinreichend genau zu erkennen und mit den in einem Speichermedium hinterlegten Stoffeigenschaften abzugleichen und bietet somit eine einfache und kostengünstige Möglichkeit, bei der Befüllung von Vorratsbehältern, beispielsweise von Vorratsbehältern in einem Kraftfahrzeug, das Vorliegen der jeweils richtigen Flüssigkeit im passenden Vorratsbehälter zu erkennen bzw. eine Fehlbefüllung zu erkennen, bevor es zu Schäden an einem aus dem jeweiligen Vorratsbehälter gespeisten System, beispielsweise dem Abgasnachbehandlungssystem einer Brennkraftmaschine, kommt.

### Zeichnungen

Ausführungsbeispiele der Erfindung sind in den Zeichnungen dargestellt und in der nachfolgenden Beschreibung näher erläutert.
In Fig. 1 ist ein Vorratsbehälter mit einem erfindungsgemäßen Messelement dargestellt.
In Fig. 2 ist ein Einfüllstützen eines Vorratsbehälters mit einem erfindungsgemäßen Messelement dargestellt.
In Fig. 3 ist ein weiteres Ausführungsbeispiel eines Vorratsbehälters mit einem erfindungsgemäßen Messelement dargestellt.
In Fig. 4 ist ein weiteres Ausführungsbeispiel eines Vorratsbehälters mit einem erfindungsgemäßen Messelement dargestellt.

### Kurze Beschreibung der Zeichnungen

Die Erfindung sowie vorteilhafte Ausgestaltungen gemäß den Merkmalen der weiteren Ansprüche werden im Folgenden anhand des in den Zeichnungen dargestellten Ausführungsbeispiels näher erläutert. In den Figuren sind gleiche Bauteile oder Bauteile mit gleicher Funktion mit den gleichen Bezugszeichen gekennzeichnet.

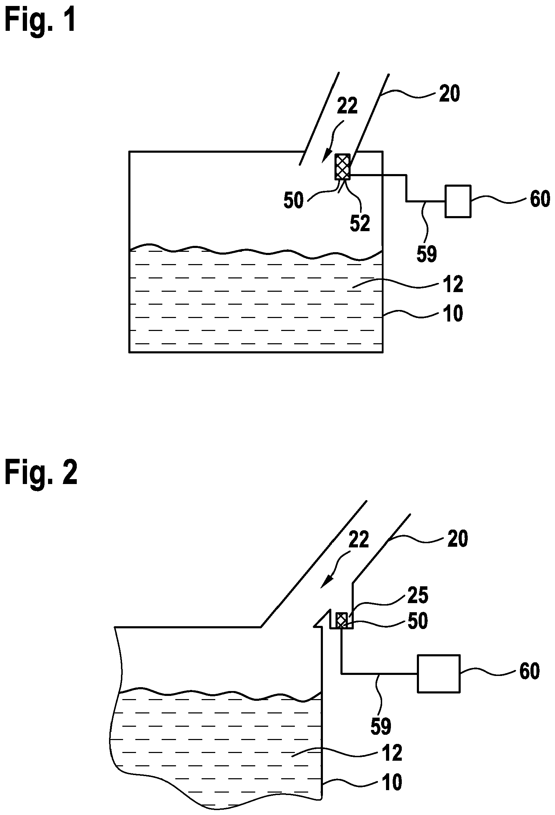

In Fig. 1 ist ein Vorratsbehälter 10 zur Bevorratung einer Flüssigkeit 12, beispielsweise einer wässrigen Harnstofflösung, mit einem Einfüllstutzen 20 dargestellt, wobei der Einfüllstutzen 20 in einem Mündungsbereich 22 den Vorratsbehälter 10 mündet. In dem Mündungsbereich 22 ist ein Messelement 50 zur Erfassung von Stoffeigenschaften einer Flüssigkeit angeordnet, wobei das Messelement 50 über eine Signalleitung 59 mit einer Messeinrichtung 60 verbunden ist.

Anhand von bestimmter Eigenschaften der Flüssigkeit 12 bzw. einem Derivat der Flüssigkeit 12, beispielsweise wässriger Harnstoff-Lösung als Flüssigkeit 12 oder Festharnstoff bzw. Harnstoffkristallen als Derivat der Flüssigkeit 12 soll die Qualität der Flüssigkeit mit vergleichsweise einfachen Mitteln hinreichend genau ermittelt werden und eine Fehlbetankung des Vorratsbehälters 10 erkannt werden.

Beim Befüllen des Vorratsbehälters 10 mit der Flüssigkeit 12 über den Einfüllstutzen 20 wird das im Mündungsbereich 22 angeordnete Messelement 50 benetzt. Dabei ist eine Oberfläche 52 des Messelements 50 so ausgebildet, dass eine Benetzung möglich ist und dass die Flüssigkeit 12, oder ein Derivat der Flüssigkeit 12, insbesondere in der Flüssigkeit gelöste Kristalle oder Partikel, beispielsweise durch Verdampfen der Flüssigkeit 12, an der Oberfläche 52 des Messelements 50 anhaftet. Beim Aktivieren einer Fördereinrichtung, welche die Flüssigkeit 12 aus dem Vorratsbehälter 10 fördert, wird durch Beheizen des Messelements 50 eine Kristallisation von Stoffen aus der Flüssigkeit 12 beschleunigt. Beispielsweise kann es sich bei dem Vorratsbehälter um den Harnstofftank einer Vorrichtung zur Abgasnachbehandlung einer Brennkraftmaschine, insbesondere eines Verbrennungsmotors in einem Kraftfahrzeug, handel, wobei das Messelement 50 durch Starten der Brennkraftmaschine oder Einschalten der Zündung aktiviert wird. Alternativ, nicht Gegenstand der Erfindung, kann auch ohne äußere Wärmezufuhr abgewartet werden, bis die Flüssigkeit 12 auf dem Messelement 50 verdunstet ist und sich eine Kristallisation gebildet hat. Durch ein Beheizen des Messelements 50 wird erfindungsgemäß im Anschluss ein Schmelzen der Kristallisation provoziert. Ist die Flüssigkeit 12 eine Harnstoff-Wasser-Lösung, so bilden sich Harnstoffkristalle, welche bei einer Temperatur von ca. 130°C bis 134°C (bei Umgebungsdruck) schmelzen und sich anschließend in Ammoniak und Kohlendioxid zersetzen. Über das Messelement 50 wird die Temperatur beim Phasenübergang, d.h. beim Schmelzen der Kristalle gemessen. Die Bestimmung der Temperatur kann beispielsweise indirekt über die Heizeinrichtung geschehen, in dem ein von der Temperatur abhängiger elektrischer Widerstand oder eine Thermospannung bestimmt werden. Dabei kann eine Beheizung des Messelements 50 sowohl in das Messelement 50 integriert sein, als auch über ein zusätzliches Heizelement erfolgen. Ein entsprechendes Messsignal kann über die Signalleitung 52 an die Messeinrichtung 60 weitergeleitet und dort ausgewertet werden. Alternativ zu einer Benetzung der Oberfläche 52 des Messelements 50 beim Einfüllen von Flüssigkeit 12 in den Vorratsbehälter 10 kann eine Benetzung der Oberfläche 52 des Messelements 50 mit Flüssigkeit 12 auch durch eine Bewegung des Vorratsbehälters 10 oder durch von außen auf die Flüssigkeit 12 wirkende Kräfte, beispielsweise Beschleunigungs- oder Fliehkräfte bei einem in einem Kraftfahrzeug angeordneten Vorratsbehälter 10 erfolgen, wenn durch Schwappbewegungen der Flüssigkeit 12 im Vorratsbehälter 10 die Oberfläche 52 des Messelements 50 benetzt wird.

Als Derivat der Flüssigkeit 12 sind im Sinne dieser Anmeldung nicht nur Auskristallisationen eines Salzes aus der Flüssigkeit 12 zu verstehen, sondern auch Flüssigkeitsgemische, Flüssigkeits-Gas-Gemische, Emulsionen oder Lösungen.

Alternativ zu der Bestimmung des Schmelz bzw. Zersetzungspunktes einer Auskristallisation der Flüssigkeit 12 kann auch, nicht erfindungsgemäß, die Temperatur am Phasenübergang fest-flüssig (Gefrierpunkt) oder, erfindungsgemäß, die Temperatur am Phasenübergang flüssig-gasförmig (Siedepunkt) der Flüssigkeit 12 bestimmt werden. Alternativ kann eine Temperaturänderung infolge einer Lösungsenthalpie eines Salzes in der Flüssigkeit bestimmt werden. Auch diese Temperaturen bzw. Temperaturänderungen sind charakteristisch für die Flüssigkeit 12 und können mit in der Messeinheit 60 hinterlegten Referenzwerten abgeglichen werden, um ein Vorliegen der jeweils gewünschten Flüssigkeit 12 zu überprüfen. Stimmen die gemessene Temperatur und die in der Messeinheit 60 hinterlegt Temperatur am Phasenübergang für die gewünschte Temperatur überein, so kann durch die Messeinheit 60 eine Freigabe für ein Fördermittel erfolgen, welches die Flüssigkeit 12 aus dem Vorratsbehälter 10 an einen Verbraucher, beispielsweise ein Dosierventil zur Eindosierung von Harnstoff-Wasser-Lösung in den Abgastrakt einer Brennkraftmaschine erfolgen. Ist das Ergebnis des Abgleichs zwischen gemessener Stoffeigenschaft am Phasenübergang und dem in der Messeinheit hinterlegten Referenzwert negativ, d.h. wird festgestellt, dass die Flüssigkeit 12 im Vorratsbehälter nicht die gewünschten Stoffeigenschaften aufweist, kann sowohl eine optische oder akustische Meldung an den Maschinenbediener, beispielsweise den Fahrer des Kraftfahrzeugs, erfolgen. Ferner kann das Fördermittel gesperrt werden, um Folgeschäden durch eine Fehlbefüllung zu vermeiden. Alternativ oder zusätzlich kann auch die Flüssigkeit 12 aus dem Vorratsbehälter 10 abgelassen und einem Entsorgungsbehälter zugeführt werden, um eine Neubefüllung des Vorratsbehälters 10 zu ermöglichen.

Zusätzlich kann das Messelement 50 oder der Vorratsbehälter 10 einen Sensor zur Erfassung des Drucks aufweisen, da die Bestimmung einer Flüssigkeit 12 durch die gleichzeitige Erfassung von Druck und Temperatur an einem Phasenübergangspunkt erleichtert wird.

In Fig. 2 ist eine weitere Ausführungsform der Erfindung dargestellt, welche sich von der Ausführungsform in Fig. 1 durch die Geometrie des Einfüllstutzens 20 unterscheidet. In der in Fig. 2 dargestellten Variante ist im Bereich des Einfüllstutzens 20 eine Messkammer 25 ausgebildet, in dem eine bestimmte Menge der Flüssigkeit 12 gespeichert werden kann. Die Messkammer 25 kann entweder beim Einfüllen der Flüssigkeit 12 in den Vorratsbehälter direkt oder über eine Fördereinrichtung aus dem Vorratsbehälter indirekt befüllt werden. Das Messelement 50 ist in oder an dieser Messkammer 25 angeordnet, wobei die Erfassung der Stoffeigenschaften bzw. die Provokation des Phasenübergangs analog den Ausführungen zu Fig. 1 erfolgt. Die Messkammer 25 kann so ausgebildet sein, beispielsweise durch eine Befüllung bis zu einem definierten Überlauf, dass nach der Befüllung der Messkammers 25 ein definiertes Volumen an Flüssigkeit 12 in der Messkammer 25 vorhanden ist. Dabei ist dieses definierte Volumen deutlich geringer als das Volumen des Vorratsbehälters 10, beispielsweise weist die Messkammer 25 nur den zwanzigsten bis den hundertsten Teil des Volumens des Volumens des Vorratsbehälters 10 auf. Somit kann ein Phasenübergang der Flüssigkeit 12 leichter und mit geringerem Energieaufwand provoziert werden.

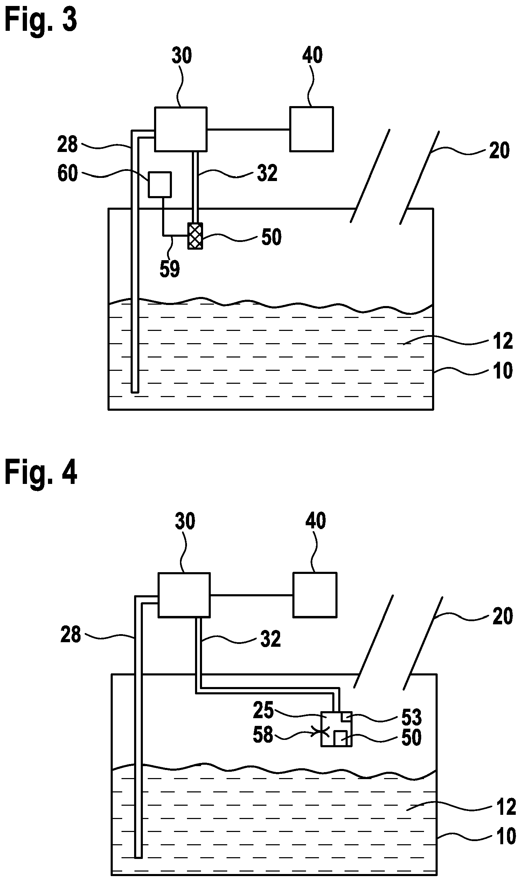

In Fig. 3 ist eine weitere alternative Ausführungsform eines Vorratsbehälters 10 mit einem erfindungsgemäßen Messelement 50 dargestellt. Dabei ist das Messelement 50 derart im Vorratsbehälter 10 angeordnet, dass es von einer Rücklaufmenge, beispielsweise eine überschüssigen Fördermenge eines Fördermittels 30, welches die Flüssigkeit 12 über eine Leitung 28 aus dem Vorratsbehälter 10 ansaugt und über eine Leitung 35 einem Verbraucher 40 zuführt. Eine überschüssige Fördermenge an Flüssigkeit 12 wird von dem Fördermittel 30 über eine Rücklaufleitung 32 wieder dem Vorratsbehälter 10 zugeführt und benetzt dabei das Messelement 50. Bei Betriebszuständen, in denen keine Fördermenge anfällt, beispielsweise weil das Fördermittel 30 abgeschaltet ist, wird durch ein Beheizen des Messelements 50 ein Auskristallisieren von einem in der Flüssigkeit 12 gelösten Salz provoziert. Dabei kristallisiert das Salz auf dem beheizbaren Messelement 50 aus. Sobald das Fördermittel 30 wieder aktiviert ist, kommt es durch eine Rücklaufmenge der Flüssigkeit 12 dazu, dass sich die Kristalle in der Flüssigkeit lösen, wobei es im Falle von wässriger Harnstofflösung durch eine vergleichsweise hohe Lösungsenthalpie von Harnstoffkristallen zu einer deutlichen Unterkühlung der Flüssigkeit 12 gegenüber der Temperatur der Flüssigkeit 12 im Rücklauf kommt. Dieser kurzzeitige (bis die Kristalle auf dem Messelement 50 vollständig gelöst sind) Temperaturrückgang während der Lösungsphase wird von dem Messelement 50 gemessen und kann über die Messeinheit 60 ausgewertet werden. Dabei dient der Temperaturrückgang als Nachweis für den in der Flüssigkeit 12 enthaltenen Harnstoff. Auch bei diesem Ausführungsbeispiel kann das Messelement 50 entweder in einer separaten Messkammer 25 angeordnet sein, welches durch den Rücklauf der Fördermittel befüllt wird. In einer besonders einfachen Ausführungsform wird das Messelement 50 so am Vorratsbehälter 10 angeordnet, dass es während der Fahrt des Kraftfahrzeuges durch Schwappen der Flüssigkeit 12 sporadisch benetzt wird. Die Auswertung der Lösungsenthalpie erfolgt dann wie oben beschrieben.

In Fig. 4 ist ein weiteres Ausführungsbeispiel eines Vorratsbehälters 10 mit einem erfindungsgemäßen Messelement 50 dargestellt. Zusätzlich zu dem Messelement 50 zur Temperaturmessung ist an dem Messelement 50 ein Drucksensor 53 angeordnet. Dazu ist eine Messkammer 25 so an oder in dem Vorratsbehälter 10 angeordnet, dass die Messkammer 25 zunächst mit der Flüssigkeit 12 befüllt wird. Im Übergang der Messkammer 25 zur unmittelbaren Umgebung ist eine Drosselstelle 58 ausgebildet. Wie in den vorhergehenden Ausführungsbeispielen ist das Messelement 50 in der Messkammer 25 angeordnet. Zur Bestimmung der Stoffeigenschaften der Flüssigkeit 12 wird die Flüssigkeit 12 wieder bis zum Siedepunkt oder bis zur Zersetzung erwärmt. Der Zersetzungvorgang oder Siedevorgang ist in diesem Fall zusätzlich an einem Druckanstieg erkennbar. Alternativ kann ein an dem Vorratsbehälter oder dem Einfüllstutzen vorhandener Drucksensor verwendet werden, um den Druckanstieg, der durch die Zersetzung bzw. das Sieden bedingt ist, zu erkennen. Die Temperatur, bei der die Zersetzung stattfindet, ist ein Indikator für Harnstoff als Flüssigkeit 12. Bei entsprechend aufwendiger Ausgestaltung des Verfahrens kann auch der Dampfdruck in Abhängigkeit von der Temperatur ermittelt werden, wodurch auch der Alterungsgrad von wässriger Harnstofflösung ermittelt werden kann.

Alternativ kann auch, nicht Gegenstand der Erfindung, der Gefrierpunkt einer Flüssigkeit 12, beispielsweise wässriger Harnstofflösung, erkannt werden. 32%ige, wässrige Harnstofflösung gefriert bei ca. -11°C.

Während des Phasenübergangs von flüssig zu fest (Gefriervorgang) bleibt die Temperatur konstant. Die Abkühlung kann beispielsweise durch Peltier Elemente geschehen. An einer geeigneten Stelle im System erfolgt die Temperaturmessung. Ebenso kann der Schmelzvorgang ausgewertet werden. Dazu kann jeweils gezielt ein eigenes Messelement 50 verbaut werden. Alternativ kann ein bereits vorhandener Temperatursensor zur Bestimmung der Temperatur der Flüssigkeit 12 im Vorratsbehälter 10 verwendet werden. Zusätzlich oder alternativ kann eine vorhandene Heizung des Vorratsbehälters verwendet werden, um gefrorene Flüssigkeit 12 zum Schmelzen zu bringen und über ein Messelement 50 die Temperatur beim Schmelzen der Flüssigkeit 12 erfasst werden.

## Patentansprüche

1. Messelement (50) zur Unterscheidung von verschiedenartigen Flüssigkeiten (12), insbesondere zur Ermittlung einer Konzentration von wässriger Harnstofflösung, in einem Vorratsbehälter (10), **dadurch gekennzeichnet, dass** das Messelement (50) eingerichtet ist, folgendes Verfahren auszuführen:
1) Beheizen der Flüssigkeit (12) oder eines Derivates der Flüssigkeit (12) über ein beheiztes Messelement (50), zur Auskristallisation eines Salzes aus der Flüssigkeit (12), oder eines Flüssigkeitsgemisches oder eines Flüssigkeits-Gas-Gemisches oder aus Emulsionen oder aus Lösungen, bis zu einer Siedetemperatur der Flüssigkeit (12) bzw. einer Zersetzungstemperatur des Derivates,
2) Entnahme der Flüssigkeit (12) für einen Vorratsbehälter, wobei das Messelement (50) außerhalb des Vorratsbehälters mit der Flüssigkeit (12) benetzt wird, oder das Messelement (50) an einer Position angeordnet ist, so dass es beim Befüllen eines Vorratsbehälters für die Flüssigkeit (12) mit der Flüssigkeit (12) benetzt wird,
3) Provozieren eines Phasenübergangs einer Flüssigkeit (12) oder eines Derivats der Flüssigkeit (12), wobei das Messelement (50) derart beheizt wird, dass die Flüssigkeit (12) auf dem Messelement (50) auskristallisiert und
4) Erkennen der Flüssigkeit (12) oder des Derivats anhand von Stoffeigenschaften, die mit dem Phasenübergang der Flüssigkeit (12) oder des Derivates der Flüssigkeit (12) korrelieren.

2. Messelement (50) nach Anspruch 1, **dadurch gekennzeichnet, dass** das Messelement (50) sowohl einen Druck als auch eine Temperatur der Flüssigkeit (12) bzw. eines Derivats der Flüssigkeit (12) ermittelt.

3. Messelement (50) nach einem der vorstehenden Ansprüche, **dadurch gekennzeichnet, dass** ein Derivat der Flüssigkeit (12), insbesondere eine Auskristallisation der Flüssigkeit (12), in der Flüssigkeit (12) gelöst wird.

4. Vorratsbehälter (10) mit einem Messelement (50) zur Unterscheidung von verschiedenartigen Flüssigkeiten (12), insbesondere zur Ermittlung einer Konzentration von wässriger Harnstofflösung, in dem Vorratsbehälter (10) nach einem der vorhergehenden Ansprüche.

## Claims

1. Measurement element (50) for distinguishing between different liquids (12), in particular for determining a concentration of aqueous urea solution, in a storage container (10), **characterized in that** the measurement element (50) is designed to perform the following method:
1) heating the liquid (12) or a derivative of the liquid (12) via a heated measurement element (50), for the crystallization of a salt out of the liquid (12), or a liquid mixture or a liquid/gas mixture or emulsions or solutions, up to a boiling temperature of the liquid (12) or a decomposition temperature of the derivative,
2) removing the liquid (12) for a storage container, wherein the measurement element (50) is wetted with the liquid (12) outside the storage container, or the measurement element (50) is arranged at a position such that, when a storage container for the liquid (12) is filled, said measurement element is wetted with the liquid (12),
3) instigating a phase transition of a liquid (12) or of a derivative of the liquid (12), wherein the measurement element (50) is heated such that the liquid (12) crystallizes on the measurement element (50), and
4) identifying the liquid (12) or the derivative on the basis of substance properties which correlate with the phase transition of the liquid (12) or of the derivative of the liquid (12).

2. Measurement element (50) according to Claim 1, **characterized in that** the measurement element (50) determines both a pressure and a temperature of the liquid (12) or of a derivative of the liquid (12).

3. Measurement element (50) according to either of the preceding claims, **characterized in that** a derivative of the liquid (12), in particular a crystallization of the liquid (12), is dissolved in the liquid (12).

4. Storage container (10) having a measurement element (50) for distinguishing between different liquids (12), in particular for determining a concentration of aqueous urea solution, in the storage container (10) according to one of the preceding claims.

## Revendications

1. Élément de mesure (50) destiné à distinguer différents liquides (12), en particulier pour déterminer une concentration de solution aqueuse d'urée, dans un réservoir (10), **caractérisé en ce que** l'élément de mesure (50) est adapté pour mettre en oeuvre le procédé suivant :
1) chauffer le liquide (12) ou un dérivé du liquide (12) par le biais d'un élément de mesure chauffé (50) pour la cristallisation d'un sel du liquide (12), d'un mélange de liquides ou d'un mélange liquide-gaz ou d'émulsions ou de solutions, jusqu'à un point d'ébullition du liquide (12) ou une température de décomposition du dérivé,
2) extraire le liquide (12) destiné à un réservoir, l'élément de mesure (50) étant mouillé avec le liquide (12) à l'extérieur du réservoir, ou l'élément de mesure (50) étant disposé à une position de manière à être mouillé avec le liquide (12) lors du remplissage d'un réservoir destiné au liquide (12),
3) provoquer une transition de phase d'un liquide (12) ou d'un dérivé du liquide (12), l'élément de mesure (50) étant chauffé de manière à ce que le liquide (12) cristallise sur l'élément de mesure (50) et
4) reconnaître le liquide (12) ou le dérivé sur la base de propriétés de matière en corrélation avec la transition de phase du liquide (12) ou du dérivé du liquide (12).

2. Élément de mesure (50) selon la revendication 1, **caractérisé en ce que** l'élément de mesure (50) détermine à la fois une pression et une température du liquide (12) ou d'un dérivé du liquide (12).

3. Élément de mesure (50) selon l'une des revendications précédentes, **caractérisé en ce qu'**un dérivé du liquide (12), en particulier une cristallisation du liquide (12), est dissous dans le liquide (12).

4. Réservoir (10) comprenant un élément de mesure (50) destiné à distinguer différents types de liquides (12), en particulier pour déterminer une concentration de solution aqueuse d'urée, dans le réservoir (10) selon l'une des revendications précédentes.
